# EUROPEAN PATENT SPECIFICATION

(11) **EP 3 947 796 B1**
(45) Date of publication and mention of the grant of the patent: **19.06.2024**
(21) Application number: 20719888.8
(22) Date of filing: 26.03.2020
(51) Int. Cl.: D03D 3/02, H02G 3/04

(54) **FLEXIBLE, ABRASION RESISTANT, WOVEN SLEEVE AND METHOD OF CONSTRUCTION THEREOF**
FLEXIBLE, ABNUTZUNGSBESTÄNDIGE TEXTILHÜLLE UND VERFAHREN ZUR HERSTELLUNG DAVON
GAINE TEXTILE SOUPLE RÉSISTANT À L'ABRASION, ET SON PROCÉDÉ DE CONSTRUCTION

(30) Priority: 26.03.2019 US 201962824217 P
(43) Date of publication of application: 09.02.2022
(73) Proprietor: Federal-Mogul Powertrain LLC, Southfield, MI 48034 (US)
(72) Inventor: QIU, Xiaodan, Downingtown, PA 19335 (US); GAO, Tianqi, Exton, PA 19341 (US); MEHBUBANI, Ritesh, Royersford, PA 19468 (US); WINTERS, Danny, Gordonville, PA 17529 (US); ADAMSKI, Emma, Pottstown, PA 19464 (US)
(74) Representative: HGF
(86) International application number: PCT/US2020/024908
(87) International publication number: WO 2020/198445

(56) References cited:
- EP-A1- 2 973 905
- US-A1- 2015 337 465
- US-A1- 2016 309 626

## Description

### BACKGROUND OF THE INVENTION

### 1. Technical Field

This invention relates generally to textile sleeves for protecting elongate members, and more particularly to woven sleeves.

### 2. Related Art

It is known to contain and protect elongate members, such as wires and wire harnesses, for example, in woven protective sleeves, such as in automobiles, aircraft or aerospace craft, to provide protection to the wires against abrasion, fluid and thermal affects. In order to achieve the multiple types of desired protection, and to ensure optimal protection to the elongate members against the effects of abrasion, the protective sleeve may have multiple layers, with some of the layers being specifically provided for different types of protection. For example, one layer may be provided for optical coverage to inhibit seeing through the sleeve, e.g. a sheet of plastic material, while another layer may be provided for abrasion resistance, and yet another layer may be provided for protection against thermal conditions. Although the aforementioned multilayer sleeves may provide suitable protection against various environmental conditions, unfortunately they are typically bulky, thereby requiring an increased volume of space, and further, they tend to be relatively heavy and exhibit low flexibility. Further yet, providing suitable protection against abrasion can still remain a challenge. Having to include multiple layers can prove problematic in some applications, particularly applications requiring routing cables or hoses through tight, winding areas, as well as applications having weight restrictions, such as aircraft and aerospace applications, for example.

Prior patent document US 2015/337465 A1 describes an example of a woven sleeve. The sleeve has a wall constructed from woven monofilament and/or multifilament yarns. The wall has opposite edges extending generally parallel to a central axis of the sleeve, wherein the opposite edges overlap one another. The wall is woven with warp yarns that extend generally parallel to the central axis of the sleeve and fill yarns that extend circumferentially about the sleeve, generally transversely to the central axis. The warp yarns are bundled into individual, discrete groups, with each group including a plurality of yarns in side-by-side relation with one another, wherein each of the yarns within the same discrete group is interlaced over the same side of a common fill yarn.

### SUMMARY OF THE INVENTION

The invention is defined by the appended claims. One aspect of the invention provides a woven textile sleeve for routing and protecting elongate members including an elongate wall configured to bound a cavity extending a longitudinal central axis of the sleeve. The wall is woven with warp yarns extending parallel to the central longitudinal axis and fill yarns extending transversely to the warp yarns. The warp yarns are woven as discrete bundles of yarns. Each of the discrete bundle of yarns includes a plurality of yarns arranged in side-by-side abutting relation with one another. The yarn filaments in each discrete bundle extend over and under the same fill yarns with one another. At least some of said discrete bundles include monofilaments. At least one of said monofilaments within said discrete bundles has a larger diameter from other yarns within said discrete bundle.

In accordance with another aspect, the invention provides a method of constructing a textile sleeve, comprising: weaving an elongate wall configured to bound a central cavity extending parallel to a central longitudinal axis of the sleeve with the wall having warp yarns extending parallel to the central longitudinal axis and fill yarns extending transverse to the warp yarns. Further, weaving the warp yarns in discrete bundles of yarns, with each of the bundles having a plurality of yarns arranged in side-by-side abutting relation with one another, with the yarns in each discrete bundle extending over and under the same fill yarns with one another. Further, weaving at least some of the discrete bundles including monofilaments, wherein at least one of said monofilaments within said discrete bundles has a larger diameter from other yarns within said discrete bundle. Further yet, the method can further include providing the fill yarns asmonofilaments and multifilaments.

In accordance with an embodiment of the invention, there is provided a woven sleeve for routing and protecting elongate members from exposure to abrasion and other environmental conditions, such as contamination. The sleeve has a flexible, abrasion resistant wall constructed from woven monofilament and multifilament yarns. The wall is configured to bound a cavity that extends along a central axis of the sleeve between opposite open ends. The wall is woven with warp yarns that extend generally parallel to the central axis of the sleeve and fill (also referred to as weft) yarns that extend circumferentially about the central axis of the sleeve, generally transversely to the central axis. The warp yarns are bundled into individual, discrete groups, with each group including a plurality of monofilaments in immediate, side-by-side, abutting relation with one another, wherein each of the monofilaments within the same discrete group is interlaced to extend over and under the same side of a same (common) fill yarn. The groups of bundled warp yarns provide enhanced abrasion resistance to abrasive forces along the length of the sleeve, while also providing the sleeve with a relatively reduced weight as compared to a similar plain weave sleeve (a plain weave does not include discrete groups of side-by-side yarns) of the same size, while the synergies provided by the warp and fill yarns further provide the sleeve with enhanced optical coverage, an ability to flex smoothly without kinking about meandering paths and corners, while also being economical in manufacture and in use. At least some of said discrete groups include monofilaments. At least one of said monofilaments within said discrete groups has a larger diameter from other yarns within said discrete bundle.

In accordance with another aspect of the invention, the wall of the sleeve can be constructed as a circumferentially continuous, seamless tubular wall.

In accordance with another aspect of the invention, the wall of the sleeve can be formed as a wrappable wall having opposite edges extending generally parallel with the central axis, wherein the opposite edges are configured to overlap one another to bound the cavity configured for receipt of the elongate member to be protected.

In accordance with another aspect of the invention, the discrete bundles of warp monofilaments can extend over a single fill yarn and under a single fill yarn in repeating fashion.

In accordance with another aspect of the invention, the discrete bundles of warp monofilaments can extend over a plurality of the fill yarns and under a plurality of the fill yarns in repeating fashion.

In accordance with another aspect of the invention, each of the discrete bundles of warp monofilaments can be provided having three (3) or more monofilaments to provide enhanced abrasion resistance.

In accordance with another aspect of the invention, the fill yarns can be provided as multifilaments and monofilaments, with the multifilaments providing enhanced optical coverage and the monofilaments being heat-set to bias the opposite edges of the wall into overlapping relation with one another.

In accordance with another aspect of the invention, the fill yarns can be provided including multifilaments and monofilaments in alternating relation with one another along the length of the sleeve, such that the immediately adjacent fill yarns extend over and under, respectively, the same warp yarn, to provide an optimal self-wrapping configuration and optimal optical coverage to the sleeve.

In accordance with another aspect of the invention, the fill yarns can be provided including multifilaments and monofilaments in bundled, side-by-side relation with one another, such that each passage (pick) of the fill yarn includes a multifilament and a monofilament either pulled in parallel relation with one another, twisted with one another, or served with one another, such that the bundled multifilament and monofilament fill yarns extend over and under the same warp yarn in side-by-side relation with one another, to provide an optimal self-wrapping configuration and optimal optical coverage to the sleeve.

In accordance with another aspect of the invention, the warp monofilaments can be provided having a larger diameter relative to the fill yarns to enhance abrasion protection to the fill yarns.

In accordance with another aspect of the invention, at least one warp monofilament within one or more of the discrete bundles of warp monofilaments can have a different diameter from other ones of the warp monofilaments within the discrete bundle, with the warp monofilaments having the greater diameter providing protection to the warp monofilaments having the lesser diameter.

In accordance with another aspect of the invention, at least one warp monofilament within one or more of the discrete bundles of warp monofilaments can be a different type of material from other ones of the warp monofilaments within the discrete bundle.

In accordance with another aspect of the invention, at least one warp monofilament within one or more of the discrete bundles of warp monofilaments can have a different diameter and be formed of a different type of material from other ones of the warp monofilaments within the discrete bundle.

In accordance with another aspect of the invention, at least one warp monofilament within one or more of the discrete bundles of warp monofilaments can have a larger diameter, such as about 0.25mm, for example, and be formed of a different type of material, such as Nylon, for example, from other ones of the warp monofilaments having a diameter of about 0.22mm, for example, and being formed of PET, for example, within the discrete bundle. The larger diameter monofilaments are provided to enhance abrasion resistance from an optimally abrasion resistant material, thereby providing protection to the smaller, less expensive monofilaments, which also provide enhanced abrasion resistance in synergistic fashion with the larger diameter monofilaments.

In accordance with another aspect of the invention, a method of constructing a textile sleeve is provided. The method includes weaving an elongate wall configured to bound a cavity that extends along a central longitudinal axis of the sleeve with the wall being having warp yarns extending parallel to the central longitudinal axis and fill yarns extending transverse to the warp yarns. Further, the method includes weaving the warp yarns in discrete bundles of yarns, with each of the bundles having a plurality of monofilament yarns arranged in side-by-side abutting relation with one another, wherein the warp yarns in each discrete bundle extends over and under the same fill yarns with one another. The method further includes weaving at least one warp monofilament within some of the discrete bundles of warp monofilaments having a larger diameter from other ones of the yarns within the discrete bundle.

In accordance with another aspect of the invention, the method can further include weaving the wall having opposite edges extending generally parallel to the central longitudinal axis, and wrapping the opposite edges in overlapping relation with one another to circumferentially bound the cavity.

In accordance with another aspect of the invention, the method can further include weaving the wall as a circumferentially continuous, seamless tubular wall.

In accordance with another aspect of the invention, the method can further include weaving the bundles over and under a single fill yarn in repeating fashion.

In accordance with another aspect of the invention, the method can further include heat-setting at least some of the fill yarns to bias the opposite edges into overlapping relation with one another.

In accordance with another aspect of the invention, the method can further include providing the fill yarns as monofilaments and multifilament yarns.

In accordance with another aspect of the invention, the method can further include weaving the fill yarns as monofilaments and multifilament yarns in alternating relation with another along the length of the sleeve.

In accordance with another aspect of the invention, the method can further include weaving the warp yarns and the fill yarns in a warp rib weave pattern.

In accordance with another aspect of the invention, the method can further include weaving at least one warp monofilament within one or more of the discrete bundles of warp monofilaments having a different diameter from other ones of the warp monofilaments within the discrete bundle to further enhance the abrasion resistance of the wall and reduce the cost associated with manufacture of the wall.

In accordance with another aspect of the invention, the method can further include weaving at least one warp monofilament within one or more of the discrete bundles of warp monofilaments of a different type of material from other ones of the warp monofilaments within the discrete bundle to further enhance the abrasion resistance of the wall and reduce the cost associated with manufacture of the wall.

In accordance with another aspect of the invention, the method can further include weaving at least one warp monofilament within one or more of the discrete bundles of warp monofilaments having a different diameter and being formed of a different type of material from other ones of the warp monofilaments within the discrete bundle to further enhance the abrasion resistance of the wall and reduce the cost associated with manufacture of the wall.

In accordance with another aspect of the invention, the method can further include weaving at least one warp monofilament within one or more of the discrete bundles of warp monofilaments having a larger diameter, such as about 0.25mm, for example, and being formed of a different type of material, such as Nylon, for example, from other ones of the warp monofilaments having a diameter of about 0.22mm, for example, and being formed of PET, for example, within the discrete bundle, such that the larger diameter monofilaments provide enhanced abrasion resistance with an optimally abrasion resistant material, thereby providing abrasion resistance protection to the smaller, less expensive monofilaments, which also provide enhanced abrasion resistance in synergistic fashion with the larger diameter monofilaments.

### BRIEF DESCRIPTION OF THE DRAWINGS

These and other aspects, features and advantages will become readily apparent to those skilled in the art in view of the following detailed description of presently preferred embodiments and best mode, appended claims, and accompanying drawings, in which:
Figure 1 is schematic perspective view of a woven, wrappable sleeve constructed in accordance with one aspect of the invention, with the sleeve shown carrying and protecting elongate members therein;
Figure 1A is a view similar to Figure 1 of a woven, circumferentially continuous sleeve constructed in accordance with another aspect of the invention, with the sleeve shown carrying and protecting elongate members therein;
Figure 2 is an enlarged schematic plan view of a portion of a wall of the sleeves of Figures 1 and 1A constructed in accordance with one embodiment of the invention;
Figure 2A is a view similar to Figure 2 illustrating a portion of a wall of the sleeves of Figures 1 and 1A constructed in accordance with another embodiment of the invention;
Figure 2B is a view similar to Figure 2 illustrating a portion of a wall of the sleeves of Figures 1 and 1A constructed in accordance with yet another embodiment of the invention;
Figure 2C is a view similar to Figure 2 illustrating a portion of a wall of the sleeves of Figures 1 and 1A constructed in accordance with yet another embodiment of the invention;
Figure 2D is a view similar to Figure 2 illustrating a portion of a wall of the sleeves of Figures 1 and 1A constructed in accordance with an example outside the scope of the invention;
Figure 2E is a view similar to Figure 2 illustrating a portion of a wall of the sleeves of Figures 1 and 1A constructed in accordance with an example outside the scope of the invention;
Figure 2F is a view similar to Figure 2 illustrating a portion of a wall of the sleeves of Figures 1 and 1A constructed in accordance with another embodiment of the invention;
Figure 2G is a view similar to Figure 2 illustrating a portion of a wall of the sleeves of Figures 1 and 1A constructed in accordance with another embodiment of the invention; and
Figure 3 is a plan view of a wall of the sleeves of Figure 1 constructed in accordance with another non-limiting embodiment of the disclosure shown prior to being wrapped into a tubular configuration.

### DETAILED DESCRIPTION OF PREFERRED EMBODIMENTS

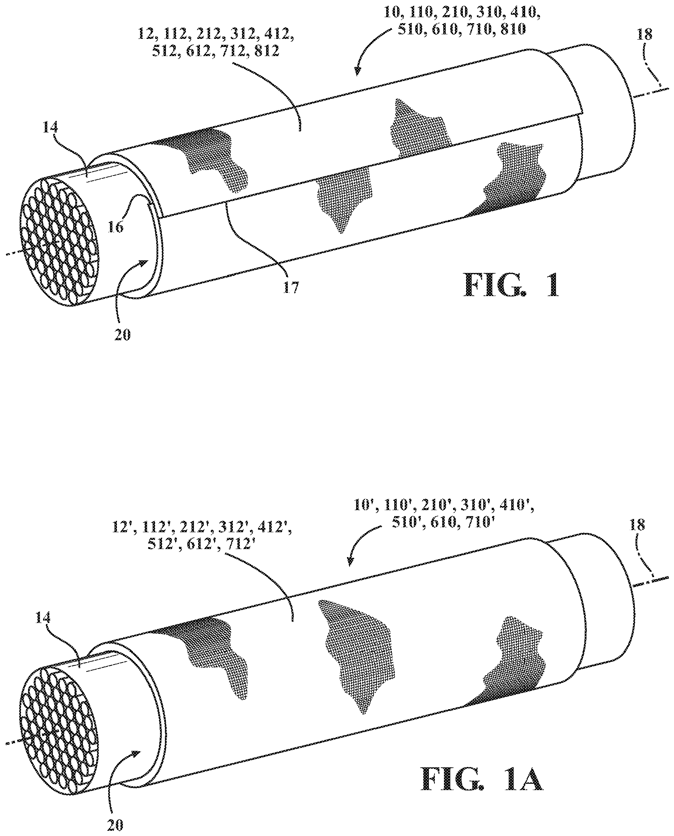

Referring in more detail to the drawings, Figure 1 shows schematic representation of a woven, wrappaple textile sleeve, referred to hereafter as sleeve 10, constructed in accordance with one aspect of the invention, while Figure 1A shows a similar view of a circumferentially continuous sleeve 10' constructed in accordance with another aspect of the invention. The sleeve 10 has a wrappable elongate wall 12, while the sleeve 10' has a circumferentially continuous, seamless wall 12', each for routing and protecting an elongate member(s), such as wires or a wire harness 14, for example, from exposure to abrasion and the ingress of contamination, debris and the like. Other than the wall 12 being wrappable and the wall 12' being circumferentially continuous and seamless, the sleeves 10, 10' and the associated yarns, discussed hereafter, used for their construction are similar, and thus, the discussion hereafter is directed to the sleeve 10, for sake of simplicity only, with it to be recognized that the same discussion applies equally to the sleeve 10', unless specifically stated otherwise. The elongate wall 12, unlike wall 12', has opposite edges 16, 17 extending generally parallel to a central, longitudinal axis 18, wherein the edges 16, 17 are preferably biased into overlapping relation with one another in "cigarette wrapped" fashion to fully enclose the elongate members 14 within a central cavity 20 of the sleeve 10. The cavity 20, unlike cavity 20' (Figure 1A), is readily accessible along the full length of the wall 12, via separation of the opposite edges 16, 17, so that the elongate member(s) 14 can be readily disposed radially, relative the axis 18, into the cavity 20, and conversely, removed from the cavity 20, such as during service. To provide the desired protection to the elongate members 14 against abrasion, and to optimize the structural integrity of the wall 12, 12' against wear from abrasion, the wall 12, 12' is woven with separate, discrete warp yarn bundles 22 extending generally parallel to the central longitudinal axis 18, wherein each bundle 22 is made up of a plurality of warp yarns 23 arranged in side-by-side, abutting relation with one another. The bundles 22, having multiple warp yarns 23 in abutting, side-by-side relation, minimize yarn movement within the wall 12, 12', such that the individual warp yarns 23 within each bundle 22 do not move significant relative to one another, thereby reducing internal friction within the wall 12, 12', which in turn reduces abrasion between warp yarns 23, even while the wall 12, 12' is moving in abutment against some external vehicle member, such as an engine component or frame member, by way of example and without limitation. Additionally, the bundles 22 provide the outer surface of the wall 12, 12' with an increased surface area of warp yarn 23 material, with the increased surface area of yarn material acting to distribute loads applied on the outer surface uniformly and widely over and beyond the impacted area of the wall 12, 12', thereby acting to reduce high point loads, thus, reducing abrasion. The wall 12, 12' is further woven with weft yarns, also commonly referred to as fill yarns 24, extending generally circumferentially about the wrapped wall 12 in generally transverse relation to the warp yarns 23. The fill yarns 24 can be provided, at least in part, as heat-settable yarns, if desired, such that upon heat-setting the fill yarns 24 while a curled or wrapped configuration, the wall 12 is biased to self-curl the opposite edges 16, 17 into overlapping relation with one another. The bias is imparted by heat-setting the fill yarns 24, such as heat-settable monofilament yarns, into their curled configuration about the central longitudinal axis 18, thereby rendering the wall 12 self-curling, also referred to as self-wrapping. It is to be recognized that by reducing the relative movement between warp yarns 23, there is also a corresponding reduction in reduced relative movement and friction between the warp yarns 23 and the fill yarns 24, thereby further reducing internal friction and abrasion within the wall 12, 12'.

Depending on the application needs, the wall 12, 12' can be constructed having any suitable size, including length and diameter. When the wall 12 is in its self-wrapped tubular configuration, generally free from any externally applied forces, the edges 16, 17 preferably overlap one another in self-biased fashion at least slightly to fully enclose the cavity 20, and thus, provide enhanced protection to the wires 14 contained in the cavity 20. The edges 16, 17 are readily extendable away from one another under an externally applied force sufficient to overcome the shape memory bias imparted by the fill yarns 24 to at least partially open and expose the cavity 20. Accordingly, the wires 14 can be readily disposed into the cavity 20 during assembly or removed from the cavity 20 during service. Upon releasing the externally applied force, the edges 16, 17 return automatically to their shape memory, overlapping self-wrapped position under the bias imparted by the heat-set fill monofilament yams 24.

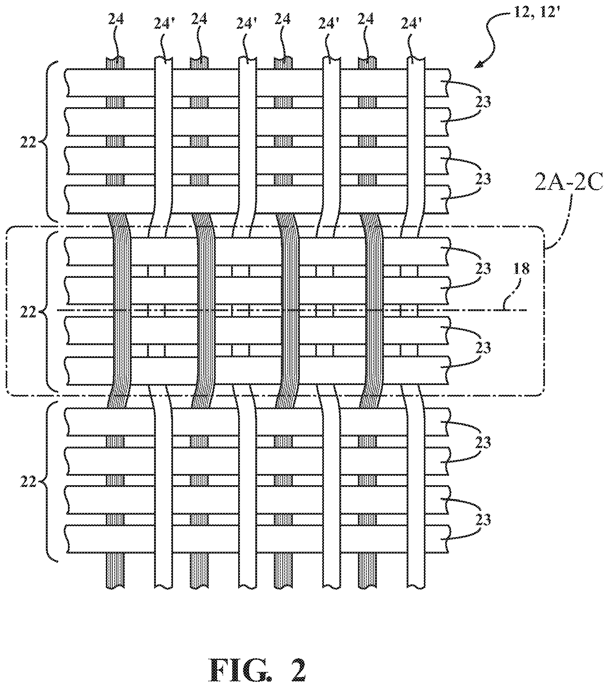

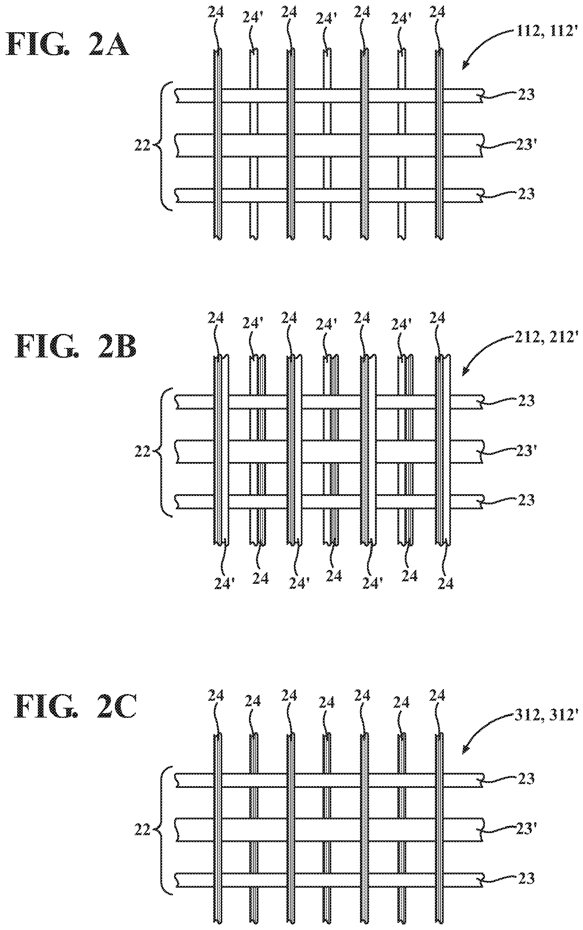

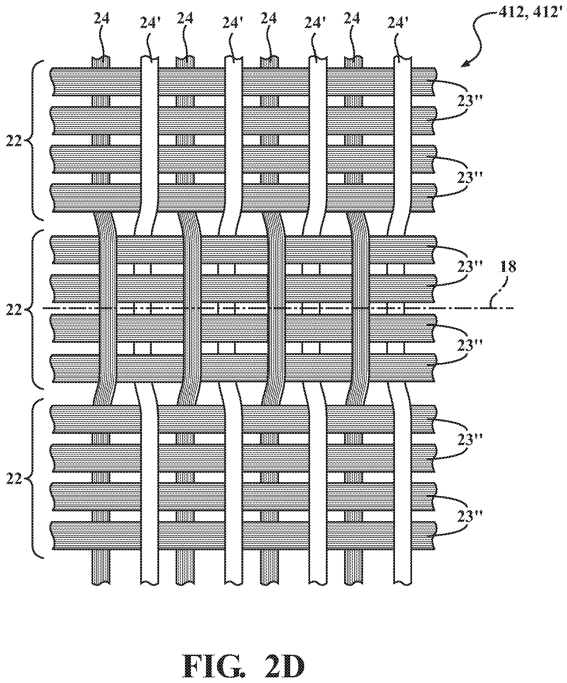

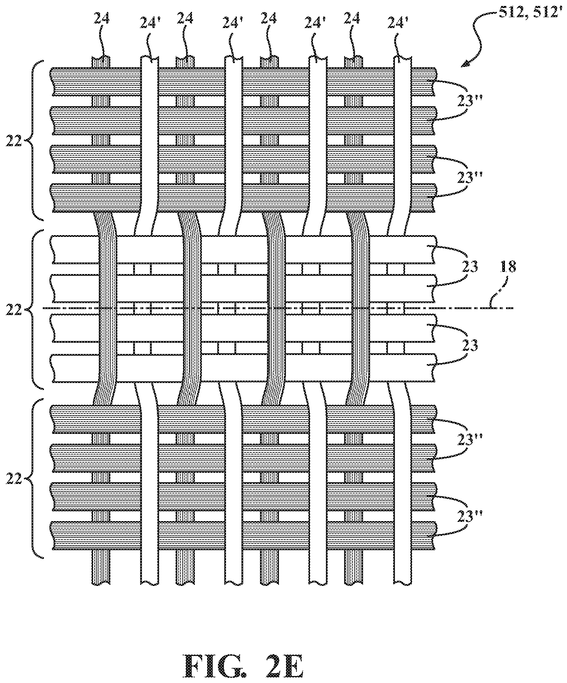

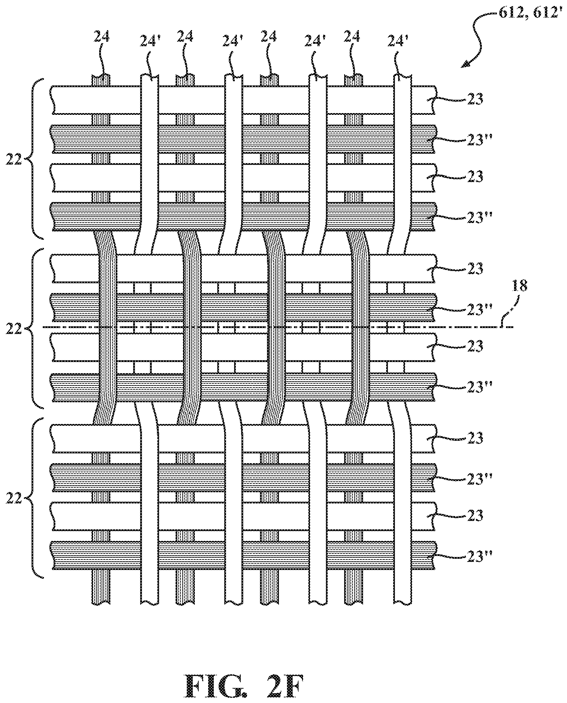

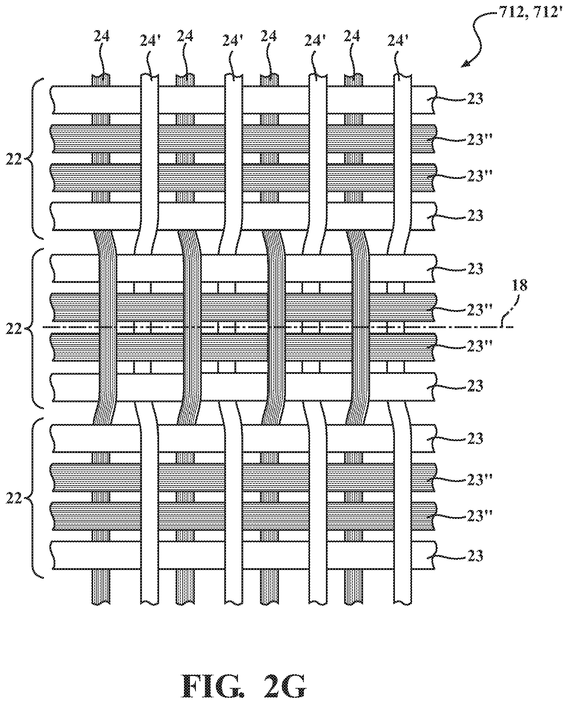

The discrete warp yarn bundles 22, in accordance with one aspect of the disclosure, can be formed of any suitable monofilament yarns 23. The monofilament warp yarns 23, in addition to providing enhanced abrasion resistance as a result of being bundled in side-by-side, abutting or substantially abutting relation with one another, provide enhanced, optimal surface area coverage to the wall 12, thereby inhibiting the ingress of contamination, debris, or the like into the cavity 20, thereby providing enhanced protection to the elongate members 14 contained within the cavity 20. In one exemplary sleeve embodiment (Figure 2), the bundles 22 were formed with four (4) monofilament warp yarns 23, and in another exemplary embodiment (Figure 2A), a wall 112, 112' of a sleeve 110, 110' can include at least one warp monofilament 23' within the discrete bundles 22 of warp monofilaments 23 having a different diameter (larger) from other ones of the warp monofilaments 23 within the discrete bundle 22, thereby providing enhanced abrasion protection to the smaller diameter warp monofilaments 23. In the non-limiting embodiment of Figure 2A (illustrating only the area identified in FIG. 2, with the remaining portion of the wall 112, 112' repeating as shown in FIG. 2), the bundles 22 were formed with three (3) monofilament warp yarns 23, though two (2) or more warp yarns 23 could be used; however, it has been discovered that having at least three (3) warp yarns 23 provides greatly improved abrasion resistance protection. The discrete bundles 22 are shown in Figures 2 and 2A, by way of example and without limitation, as being woven in a warp rib-type weave pattern, with each discrete bundle 22 extending over a common single fill yarn 24 and then under a common single fill yarn 24, in repeating fashion, though other warp rib-type weave .

The fill yarns 24 can be provided as any suitable monofilament and/or multifilament material, including heat-settable monofilament and/or multifilament polymeric material. In the exemplary sleeve embodiments shown in Figures 2 and 2A, the fill yarns 24 are provided as both heat-settable monofilaments 24' (though non-heat-settable monofilaments can be used, particularly with the wall 12') and high coverage multifilaments 24, spaced from one another such that the immediately adjacent yarns 24, 24' extend, respectively, over and under the same warp yarn 23 (a fill yarn 24 extends over a first warp yarn 23 while an immediately adjacent fill yarn 24' extends under the first warp yarn 23). To provide the wall 12 with increased self-wrapping capacity and increased optical coverage, to inhibit seeing through the wall 12 into the cavity 20, thereby enhancing protection against the ingress of contamination, the fill yarn 24 monofilaments and multifilaments are woven in alternating fashion with one another along the length of the sleeve 10. As shown in Figure 2A, the fill yarns 24, 24' can be provided having a reduced cross-section area (reduced diameter) relative to at least some of the warp yarns 23, which facilitates providing the sleeve 10 with an increased degree of flexibility, while also inhibiting abrasion of the fill yarns 24, 24', given the more numerous and tightly packed warp monofilaments 23 are prone to absorb the abrasion. Accordingly, at least some or all the warp monofilaments 23', as shown, can be provided having a larger diameter relative to the fill yarns 24, 24' to enhance abrasion protection to the fill yarns 24, 24'. However, should the fill yarns 24, 24' become abraded, it has been discovered that the tightly packed, abutting warp yarns 23, 23' of the bundles 22 are able to maintain the integrity of the structure of the wall 12, 12', thereby maintaining protection of the elongate member(s) 14. Further yet, the fill yarns 24 can be provided having a relative low pick density (picks-per-inch), which ultimately increases the production run rate (speed at which the wall 12, 12' is woven), thereby decreasing cost of manufacture, while also decreasing the overall material content, and thus, further reducing costs associated with production of the sleeve 10.

The yarns 23, 24, 24' can be provided of any desired thermoplastic material, such as one or more of polyester, PPS, Nomex, by way of example and without limitation, and further can include inorganic material, such as one or more of fiberglass and basalt, by way of example and without limitation.

In accordance with another aspect of the invention at least one warp monofilament 23' within one or more of the discrete bundles 22 of warp monofilaments 23 can be a different type of material from other ones of the warp monofilaments 23 within the discrete bundle 22.

In accordance with another aspect of the invention, as shown in Figure 2A, at least one warp monofilament 23' within one or more of the discrete bundles 22 can have a different diameter and be formed of a different type of material from other ones of the warp monofilaments 23 within the discrete bundle 22. Accordingly, synergies can be optimized by providing the warp monofilaments 23, 23' within a common bundle 22 having different diameters and/or from different materials, to both enhance abrasion resistance, while at the same time improving economies of manufacture and reducing cost. For example, in one exemplary embodiment, at least one warp monofilament 23' within one or more of the discrete bundles 22 of warp monofilaments 23 can have a larger diameter, such as about 0.25mm, for example, and be formed of a different type of material, such as Nylon, for example, from other ones of the warp monofilaments 23 having a diameter of about 0.22mm, for example, and being formed of PET, for example, within the discrete bundle 22. The larger diameter monofilaments 23' are provided to enhance abrasion resistance from an optimally abrasion resistant material, e.g. Nylon, thereby providing protection to the smaller, less expensive monofilaments 23, which also provide enhanced abrasion resistance in synergistic fashion with the larger diameter monofilaments 23'. It is to be recognized that the diameters and materials selected for the warp monofilaments 23, 23' can be selected as desired for the intended application.

In accordance with another aspect of the invention, as shown in Figure 2B (illustrating only the area identified in FIG. 2, with the remaining portion of the wall 212, 212' repeating as shown in FIG. 2), a wall 212, 212' of a sleeve 210, 210' can include the fill yarns being provided including multifilaments 24 and monofilaments 24' in bundled, side-by-side relation with one another, such that each passage (woven as a single pick) of the fill yarn includes both the multifilament 24 and the monofilament 24' either pulled in parallel relation with one another, twisted (both are helically spiraled together) with one another, or served (one is helically spiraled about the other) with one another, such that the bundled multifilament and monofilament fill yarns 24, 24' extend over and under the same warp yarns 23, 23' in side-by-side relation with one another, to provide an improved self-wrapping configuration and optimal optical coverage to the sleeve.

In accordance with another aspect of the invention, as shown in Figure 2C (illustrating only the area identified in FIG. 2, with the remaining portion of the wall 312, 312' repeating as shown in FIG. 2), a wall 312, 312' of a sleeve 310, 310' can be constructed in similar fashion as discussed above for the wall 212, 212'; however, the fill yarns can be provided including only multifilaments 24 woven with bundles 22 of warp yarns 23 and optionally warp yarns 23'.

In accordance with another aspect of the invention, a wall of a sleeve can be constructed in similar fashion as discussed above for any of the walls 12, 12', 112, 112', 212, 212', 312, 312'; however, at least one of the warp yarns within each of the bundles 22 can be provided as multifilaments 23". Accordingly, the coverage against ingress of contamination and the flexibility of the wall are greatly increased. In Figure 2D (illustrating a view similar to FIG. 2), a wall 412, 412' of a sleeve 410, 410' can be constructed in similar fashion as discussed above for any of the walls 12, 12', 112, 112', 212, 212', 312, 312'; however all of the warp yarns within each of the bundles 22 are provided as multifilaments 23". The sleeve 410, 410' is outside the scope of the invention.

In accordance with another aspect of the invention, a wall of a sleeve can be constructed in similar fashion as discussed above for any of the walls 12, 12', 112, 112', 212, 212', 312, 312'; however, at least one of the bundles 22, can be provided as multifilaments 23". Accordingly, alternating bundles 22 include only multifilaments 23" and alternating bundles 22 include only monofilaments 23. Accordingly, the coverage against ingress of contamination and the flexibility of the wall are greatly increased by the multifilaments 23" as is the resistance to abrasion by the monofilaments 23. In Figure 2E (illustrating a view similar to FIG. 2), a wall 512, 512' of a sleeve 510, 510' can be constructed in a similar fashion as discussed above for any of the walls 12, 12', 112, 112', 212, 212', 312, 312'; however, at least one of the bundles 22, shown as alternating bundles 22, is provided as multifilaments 23". Accordingly, alternating bundles 22 include only multifilaments 23" and alternating bundles 22 include only monofilaments 23. The sleeve 510, 510' shown in Figure 2E is outside the scope of the invention when the monofilaments 23 in the bundles 22 that include only monofilaments 23 have the same diameter as each other.

In accordance with another aspect of the invention, as shown in Figure 2F (illustrating a view similar to FIG. 2), a wall 612, 612' of a sleeve 610, 610' can be constructed in similar fashion as discussed above for any of the walls 12, 12', 112, 112', 212, 212', 312, 312'; however, each of the bundles 22 can be provided including multifilaments 23" and monofilaments 23. In the embodiment shown, the bundles 22 including the monofilaments 23 and multifilaments 23" alternating with one another, such that an increased surface friction of the multiflaments 23" act to fix and lock the abutting monofilaments 23 in place. Accordingly, the coverage against ingress of contamination and the flexibility of the wall 612, 612' are greatly increased by the multifilaments 23" as is the resistance to abrasion by the monofilaments 23.

In accordance with another aspect of the invention, as shown in Figure 2G (illustrating a view similar to FIG. 2), a wall 712, 712' of a sleeve 710, 710' can be constructed in similar fashion as discussed above for any of the walls 12, 12', 112, 112', 212, 212', 312, 312'; however, each of the bundles 22 can be provided including multifilaments 23" and monofilaments 23, such as discussed for wall 612, 612'; however, the multifilaments 23" and monofilaments 23 are arranged differently. In the embodiment shown, each of the bundles 22 multifilaments 23" in side-by-side, abutting relation with one another. In the exemplary embodiment, a pair of multilaments 23 are arranged in side-by-side, abutting relation with one another, and a single monofilament 23 is arranged along each side of the pair of multifilaments 23" in abutment therewith. Accordingly, the increased surface friction of the multiflaments 23" acts to fix and lock the abutting monofilaments 23 in place. Accordingly, the coverage against ingress of contamination and the flexibility of the wall 712, 712' are greatly increased by the multifilaments 23" as is the resistance to abrasion by the monofilaments 23.

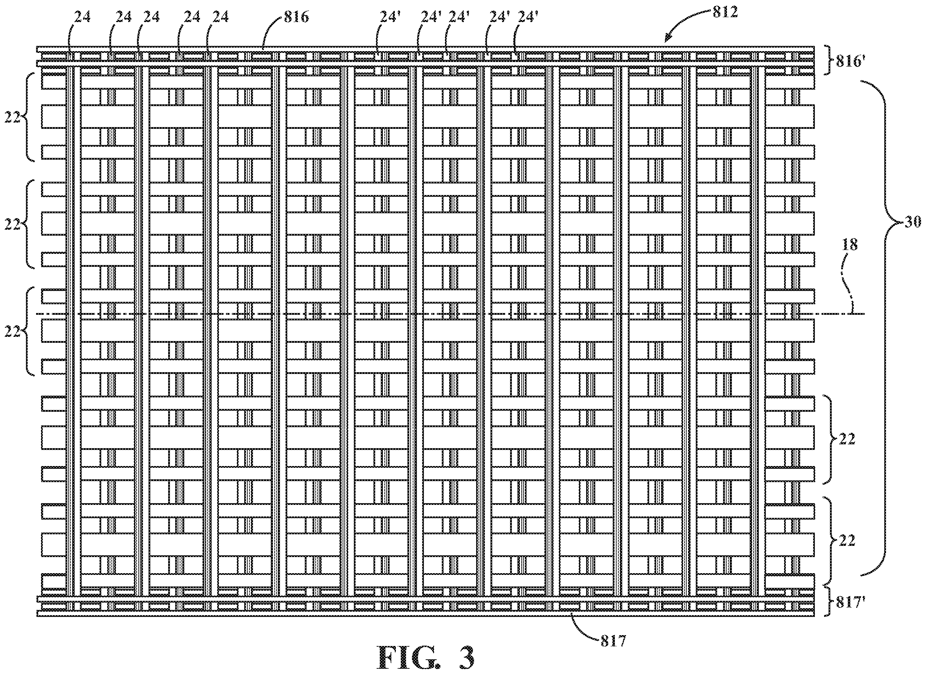

In accordance with another aspect of the invention, as shown in Figure 3, a wall 812 of a sleeve 810 can be constructed in similar fashion as discussed above for any of the walls 12, 112, 212, 312, with the wall 812 having opposite edges 816, 817 extending generally parallel to a central, longitudinal axis 818, wherein the edges 816, 817 are preferably biased into overlapping relation with one another. At least one or both edges 816, 817 can include edge regions 816', 817' spanning a plurality of warp yarns 23 along the entirety of the length of the sleeve 810, such as between about 4-10 warp yarns 23, by way of example and without limitation, wherein the edge regions 816', 817' are woven with a plain weave pattern. Accordingly, the fill yarn 24, 24' within the edge region 816', 817' is woven with the warp yarns 23 in a plain weave pattern. An intermediate main body region 30 extending between and from one edge region 816' to the opposite edge region 817' is woven with the warp rib weave pattern of the fill yarn 24, 24' with the warp yarn 23, as discussed above. With the opposite edge regions 816', 817' having a plain weave pattern, it has been found that upon bending the sleeve 810 about sharp corners, the opposite edges 816, 817 remain in their overlapped relation with one another, and avoid being separated or otherwise opened from one another. Accordingly, openings between the opposite edges 816, 817 are inhibited, thereby providing optimal coverage to the elongate member 14 contained within the sleeve 810.

Obviously, many modifications and variations of the present invention are possible in light of the above teachings. It is, therefore, to be understood that within the scope of the appended claims, the invention may be practiced otherwise than as specifically described.

## Claims

1. A woven textile sleeve (110; 110'; 210; 210'; 310; 310'; 810) for routing and protecting elongate members (14), comprising:
an elongate wall (112; 112'; 212; 212'; 312; 312'; 812) configured to bound a cavity (20) extending a longitudinal central axis (18; 818) of the sleeve, said wall being woven with warp yarns (23, 23') extending parallel to said central longitudinal axis and fill yarns (24, 24') extending transversely to said warp yarns, said warp yarns being woven as discrete bundles (22) of yarns, wherein each said discrete bundle of yarns includes a plurality of yarns arranged in side-by-side abutting relation with one another, with said yarns in each discrete bundle extending over and under the same said fill yarns with one another;
wherein at least some of said discrete bundles include monofilaments;
**characterized in that** at least one of said monofilaments within said discrete bundles has a larger diameter from other yarns (23) within said discrete bundle.

2. The textile sleeve (110; 110'; 210; 210'; 310; 310'; 810) of claim 1, wherein each said bundle (22) of yarns extends over a single fill yarn (24, 24') and under a single fill yarn in repetition.

3. The textile sleeve (110; 110'; 210; 210') of claim 1, wherein said fill yarns (24, 24') include monofilaments (24') and multifilaments (24) that alternate with one another along the longitudinal central axis (18).

4. The textile sleeve (110; 210; 310; 810) of claim 1, wherein said wall has opposite edges (16, 17; 816, 817) biased into overlapping relation with one another by at least some of said fill yarns (24, 24') being heat-set.

5. The textile sleeve of claim 1, wherein at least some of said bundles include multifilaments.

6. The textile sleeve of claim 5, wherein at least some of said bundles include only monofilaments and wherein at least some of said bundles include only multifilaments.

7. The textile sleeve of claim 5, wherein at least some of said bundles include monofilaments and multifilaments, and optionally wherein each of said bundles include monofilaments and multifilaments.

8. The textile sleeve (110; 110'; 210; 210'; 310; 310'; 810) of claim 1, wherein each of said bundles (22) include only monofilaments.

9. The textile sleeve (110; 110'; 210; 210'; 310; 310'; 810) of claim 1, wherein said monofilaments have a larger diameter relative to the fill yarns (24, 24').

10. The textile sleeve (110; 110'; 210; 210'; 310; 310'; 810) of claim 1, wherein at least one yarn (23, 23') within at least one of said discrete bundles (22) of warp yarns (23, 23') is a different type of material from other ones of said yarns within said at least one of said discrete bundles or wherein at least one yarn within at least one of said discrete bundles (22) of warp yarns (23, 23') has a different diameter and is formed of a different type of material from other ones of said yarn filaments within said at least one of said discrete bundles.

11. The textile sleeve of claim 5, wherein at least some of said bundles include only multifilaments.

12. A method of constructing a textile sleeve, comprising:
weaving an elongate wall configured to bound a central cavity extending parallel to a central longitudinal axis of the sleeve with the wall having warp yarns extending parallel to the central longitudinal axis and fill yarns extending transverse to the warp yarns;
weaving the warp yarns in discrete bundles of yarns, each of the bundles having a plurality of yarns arranged in side-by-side abutting relation with one another, with the yarns in each discrete bundle extending over and under the same fill yarns with one another; and weaving at least some of the discrete bundles including monofilaments,
**characterised in that** at least one of said monofilaments within said discrete bundles has a larger diameter from other yarns (23) within said discrete bundle.

13. The method of claim 12, further including providing the fill yarns as monofilaments and multifilaments.

14. The method of claim 12 or 13, further including weaving each the bundles including monofilaments and providing at least one monofilament within each of the discrete bundles having a larger diameter from other ones of the yarns within the discrete bundles.

15. The method of claim 13, further including weaving each said bundles including multifilaments, and optionally further including weaving each of the monofilaments in the bundles being in side-by-side relation with one of the multifilaments in in the bundles.

## Patentansprüche

1. Textilgewebehülle (110; 110'; 210; 210'; 310; 310'; 810) zum Führen und Schützen von länglichen Elementen (14), umfassend:
eine längliche Wand (112; 112'; 212; 212'; 312; 312'; 812), die konfiguriert ist, um einen Hohlraum (20) zu begrenzen, der sich entlang einer Längsmittelachse (18; 818) der Hülle erstreckt, wobei die Wand mit Kettfäden (23, 23'), die sich parallel zu der Längsmittelachse erstrecken, und Schussfäden (24, 24'), die sich quer zu den Kettfäden erstrecken, gewebt ist, wobei die Kettfäden als separate Bündel (22) von Fäden gewebt sind, wobei jedes separate Bündel von Fäden eine Vielzahl von Fäden beinhaltet, die in Seite an Seite aneinanderstoßender Beziehung zueinander angeordnet sind, wobei sich die Fäden in jedem separaten Bündel über und unter denselben Schussfäden zueinander erstrecken;
wobei zumindest einige der separaten Bündel Monofilamente beinhalten;
**dadurch gekennzeichnet, dass** zumindest eines der Monofilamente innerhalb der separaten Bündel einen größeren Durchmesser als andere Fäden (23) innerhalb des separaten Bündels aufweist.

2. Gewebehülle (110; 110'; 210; 210'; 310; 310'; 810) nach Anspruch 1, wobei sich jedes Bündel (22) von Fäden über einem einzelnen Schussfaden (24, 24') und unter einem einzelnen Schussfaden in Wiederholung erstreckt.

3. Gewebehülle (110; 110'; 210; 210') nach Anspruch 1, wobei die Schussfäden (24, 24') Monofilamente (24') und Multifilamente (24) beinhalten, die sich entlang der Längsmittelachse (18) untereinander abwechseln.

4. Gewebehülle (110; 210; 310; 810) nach Anspruch 1, wobei die Wand gegenüberliegende Kanten (16, 17; 816, 817) aufweist, die dadurch, dass zumindest einige der Schussfäden (24, 24') thermofixiert sind, in überlappender Beziehung zueinander vorgespannt sind.

5. Gewebehülle nach Anspruch 1, wobei zumindest einige der Bündel Multifilamente beinhalten.

6. Gewebehülle nach Anspruch 5, wobei zumindest einige der Bündel nur Monofilamente beinhalten und wobei zumindest einige der Bündel nur Multifilamente beinhalten.

7. Gewebehülle nach Anspruch 5, wobei zumindest einige der Bündel Monofilamente und Multifilamente beinhalten und wobei optional jedes der Bündel Monofilamente und Multifilamente beinhaltet.

8. Gewebehülle (110; 110'; 210; 210'; 310; 310'; 810) nach Anspruch 1, wobei jedes der Bündel (22) nur Monofilamente beinhaltet.

9. Gewebehülle (110; 110'; 210; 210'; 310; 310'; 810) nach Anspruch 1, wobei die Monofilamente einen größeren Durchmesser relativ zu den Schussfäden (24, 24') aufweisen.

10. Gewebehülle (110; 110'; 210; 210'; 310; 310'; 810) nach Anspruch 1, wobei zumindest ein Faden (23, 23') innerhalb von zumindest einem der separaten Bündel (22) aus Kettfäden (23, 23') eine andere Art von Material als andere der Fäden innerhalb des zumindest einen der separaten Bündel ist oder wobei zumindest ein Faden innerhalb von zumindest einem der separaten Bündel (22) aus Kettfäden (23, 23') einen anderen Durchmesser aufweist und aus einer anderen Art von Material als andere der Fadenfilamente innerhalb des zumindest einen der separaten Bündel gebildet ist.

11. Gewebehülle nach Anspruch 5, wobei zumindest einige der Bündel nur Multifilamente beinhalten.

12. Verfahren zum Herstellen einer Gewebehülle, umfassend:
Weben einer länglichen Wand, die konfiguriert ist, um einen zentralen Hohlraum zu begrenzen, der sich parallel zu einer Längsmittelachse der Hülle erstreckt, wobei die Wand Kettfäden, die sich parallel zu der Längsmittelachse erstrecken, und Schussfäden, die sich quer zu den Kettfäden erstrecken, aufweist;
Weben der Kettfäden in separaten Bündeln von Fäden, wobei jedes der Bündel eine Vielzahl von Fäden aufweist, die in Seite an Seite aneinanderstoßender Beziehung zueinander angeordnet sind, wobei sich die Fäden in jedem separaten Bündel über und unter den gleichen Schussfäden zueinander erstrecken; und Weben von zumindest einigen der separaten Bündel, die Monofilamente beinhalten,
**dadurch gekennzeichnet, dass** zumindest eines der Monofilamente innerhalb der separaten Bündel einen größeren Durchmesser als andere Fäden (23) innerhalb des separaten Bündels aufweist.

13. Verfahren nach Anspruch 12, ferner beinhaltend Bereitstellen der Schussfäden als Monofilamente und Multifilamente.

14. Verfahren nach Anspruch 12 oder 13, ferner beinhaltend Weben von jedem der Bündel, die Monofilamente beinhalten, und Bereitstellen von zumindest einem Monofilament innerhalb jedes der separaten Bündel mit einem größeren Durchmesser als die anderen der Fäden innerhalb der separaten Bündel.

15. Verfahren nach Anspruch 13, ferner beinhaltend Weben von jedem der Bündel, die Multifilamente beinhalten, und optional ferner beinhaltend Weben von jedem der Monofilamente in den Bündeln, die in Seite-an-Seite-Beziehung mit einem der Multifilamente in den Bündeln sind.

## Revendications

1. Gaine textile tissée (110 ; 110' ; 210 ; 210' ; 310 ; 310' ; 810) permettant l'acheminement et la protection d'éléments allongés (14), comprenant :
une paroi allongée (112 ; 112' ; 212 ; 212' ; 312 ; 312' ; 812) configurée pour délimiter une cavité (20) prolongeant un axe central longitudinal (18 ; 818) du manchon, ladite paroi étant tissée avec des fils de chaîne (23, 23') s'étendant parallèlement audit axe longitudinal central et des fils de trame (24, 24') s'étendant transversalement auxdits fils de chaîne, lesdits fils de chaîne étant tissés sous forme de faisceaux discrets (22) de fils, dans laquelle chacun desdits faisceaux discrets de fils comprend une pluralité de fils disposés côte à côte, en relation de butée les uns avec les autres, avec lesdits fils dans chaque faisceau discret s'étendant au-dessus et au-dessous des mêmes fils de trame les uns avec les autres;
dans laquelle au moins certains desdits faisceaux discrets comprennent des monofilaments ;
**caractérisée en ce qu'**au moins un desdits monofilaments à l'intérieur desdits faisceaux discrets comporte un diamètre plus grand que celui des autres fils (23) au sein dudit faisceau discret.

2. Gaine textile (110 ; 110' ; 210 ; 210' ; 310 ; 310' ; 810) selon la revendication 1, dans laquelle chaque dit faisceau (22) de fils s'étend sur un fil de trame simple (24, 24') et sous un fil de trame simple en répétition.

3. Gaine textile (110 ; 110' ; 210 ; 210') selon la revendication 1, dans laquelle lesdits fils de trame (24, 24') comprennent des monofilaments (24') et des multifilaments (24) qui alternent les uns avec les autres le long de l'axe central longitudinal (18).

4. Gaine textile (110 ; 210 ; 310 ; 810) selon la revendication 1, dans laquelle ladite paroi comporte des bords opposés (16, 17 ; 816, 817) sollicités en relation de chevauchement l'un avec l'autre par au moins certains desdits fils de trame (24, 24') étant thermofixés.

5. Gaine textile selon la revendication 1, dans laquelle au moins certains desdits faisceaux comprennent des multifilaments.

6. Gaine textile selon la revendication 5, dans laquelle au moins certains desdits faisceaux comprennent uniquement des monofilaments et dans laquelle au moins certains desdits faisceaux comprennent uniquement des multifilaments.

7. Gaine textile selon la revendication 5, dans laquelle au moins certains desdits faisceaux comprennent des monofilaments et des multifilaments, et facultativement dans laquelle chacun desdits faisceaux comprend des monofilaments et des multifilaments.

8. Gaine textile (110 ; 110' ; 210 ; 210' ; 310 ; 310' ; 810) selon la revendication 1, dans laquelle chacun desdits faisceaux (22) comprend uniquement des monofilaments.

9. Gaine textile (110 ; 110' ; 210 ; 210' ; 310 ; 310' ; 810) selon la revendication 1, dans laquelle lesdits monofilaments comportent un diamètre plus grand par rapport aux fils de trame (24, 24').

10. Gaine textile (110 ; 110' ; 210 ; 210' ; 310 ; 310' ; 810) selon la revendication 1, dans laquelle au moins un fil (23, 23') au sein d'au moins un desdits faisceaux discrets (22) de fils de chaîne (23, 23') est un type de matériau différent d'autres desdits fils au sein dudit au moins un desdits faisceaux discrets ou dans laquelle au moins un fil au sein d'au moins un desdits faisceaux discrets (22) de fils de chaîne (23, 23') comporte un diamètre différent et est formé d'un type de matériau différent d'autres desdits filaments de fil au sein dudit au moins un desdits faisceaux discrets.

11. Gaine textile selon la revendication 5, dans laquelle au moins certains desdits faisceaux comprennent uniquement des multifilaments.

12. Procédé de construction d'une gaine textile, comprenant :
le tissage d'une paroi allongée configurée pour délimiter une cavité centrale s'étendant parallèlement à un axe longitudinal central de la gaine, la paroi comportant des fils de chaîne s'étendant parallèlement à l'axe longitudinal central et des fils de trame s'étendant transversalement aux fils de chaîne ;
le tissage des fils de chaîne en faisceaux discrets de fils, chacun des faisceaux comportant une pluralité de fils disposés en relation de butée côte à côte les uns avec les autres, avec les fils de chaque faisceau discret s'étendant au-dessus et au-dessous des mêmes fils de trame les uns avec les autres ; et le tissage d'au moins certains des faisceaux discrets comprenant des monofilaments,
**caractérisé en ce qu'**au moins un desdits monofilaments au sein desdits faisceaux discrets comporte un diamètre plus grand que celui des autres fils (23) au sein dudit faisceau discret.

13. Procédé selon la revendication 12, comprenant en outre la fourniture des fils de trame sous forme de monofilaments et de multifilaments.

14. Procédé selon la revendication 12 ou 13, comprenant en outre le tissage de chacun des faisceaux comprenant des monofilaments et la fourniture d'au moins un monofilament au sein de chacun des faisceaux discrets comportant un diamètre plus grand que d'autres des fils au sein des faisceaux discrets.

15. Procédé selon la revendication 13, comprenant en outre le tissage de chacun desdits faisceaux comprenant des multifilaments, et comprenant éventuellement en outre le tissage de chacun des monofilaments dans les faisceaux étant en relation côte à côte avec l'un des multifilaments dans les faisceaux.
